# DEMANDE DE BREVET EUROPEEN

(11) **EP 2 175 565 A1**
(43) Date de publication de la demande: **14.04.2010**
(21) Numéro de dépôt: 09012434.8
(22) Date de dépôt: 01.10.2009
(51) Int. Cl.: H04B 1/38, H04M 1/725

(54) **Enveloppe de protection pour dispositif électronique portable**

(30) Priorité: 09.10.2008 US 248201; 20.11.2008 FR 0806508
(71) Demandeur: Inside Contactless, 13856 Aix-en-Provence (FR)
(72) Inventeur: Serra, Didier, 94062 Redwood City California (US); Walton, Charles, Marshfield, MA 02050 (US)
(74) Mandataire: Marchand, André

(57) **Abrégé**

Enveloppe de protection (300) pour dispositif électronique portable, conformée pour recouvrir au moins 40% d'une surface du dispositif portable et comprenant au moins un premier logement (34, 35) recevant au moins un premier processeur hôte (SE1, SE2) ou adapté pour recevoir au moins un premier processeur hôte, au moins une antenne principale (AC1) et une liaison entre le processeur hôte et l'antenne principale.

## Description

La présente invention concerne une enveloppe de protection pour dispositif électronique portable, tel qu'un téléphone portable, un assistant numérique personnel ou un baladeur MP3.

La présente invention concerne également des techniques RFID (Radio-Frequency Identification ou identification par radio fréquence) et NFC (Near Field Communication ou communication à champ proche).

Ces dernières années, d'importants investissements en recherche et développement ont été consentis par l'industrie afin d'intégrer la technologie NFC dans des dispositifs électroniques portables très répandus, notamment les téléphones portables. Les fabricants de téléphones portables proposent d'ores et déjà de nouvelles générations de téléphones portable NFC qui offrent, en sus des fonctions habituelles, des fonctions NFC (comme par exemple le téléphone 6131 NFC déjà commercialisé par la société Nokia®).

Les techniques NFC offrent une distance de communication courte, typiquement comprise entre quelques millimètres et quelques dizaines de centimètres, et sont utilisés en combinaison avec les techniques RFID classiques afin de permettre à des puces électroniques d'échanger des données avec des cartes à puces sans contact, des étiquettes électroniques sans contact, ou d'autres puces NFC, par couplage inductif.

Ainsi, un téléphone portable NFC peut typiquement lire des données sur des étiquettes ou des cartes RFID sans contact, ou communiquer avec d'autres dispositifs NFC. La technologie NFC permet également d'effectuer des transactions, comme le paiement de services (transport, factures, etc. ), le retrait d'argent, l'achat d'unités, etc. Un téléphone NFC peut ainsi être utilisé comme un moyen de paiement similaire à une carte de crédit.

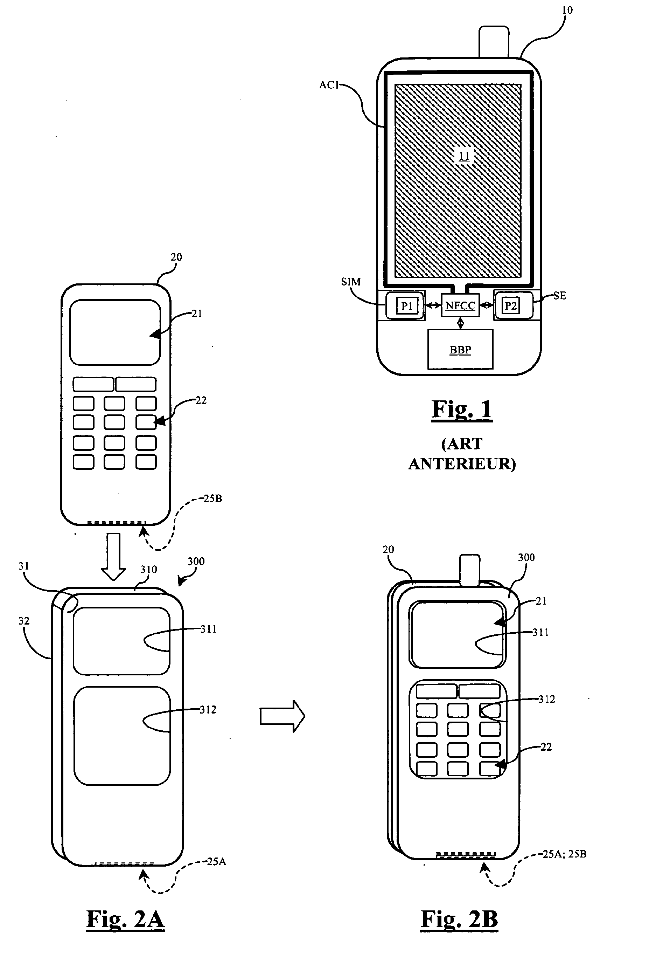

La figure 1 représente schématiquement l'architecture d'un téléphone portable 10 équipé de moyens de communication NFC. Le téléphone 10 comprend classiquement un processeur de bande de base BBP, un module d'identification de l'abonnée SIM (Subscriber Identification Module) inséré dans un logement du téléphone 10 et présentant un processeur P1, et divers circuits et commandes (clavier, écran, etc. ), représentés schématiquement par un bloc ombré 11. Les moyens de communication NFC du téléphone portable 10 incluent un contrôleur NFC, désigné par la référence NFCC, et un circuit d'antenne présentant une bobine d'antenne AC1 ayant un ou plusieurs enroulements.

Afin de permettre à l'utilisateur d'accéder à des services de paiement, un élément sécurisé SE comprenant un processeur P2 est également prévu. Ce processeur P2 peut être intégré dans le téléphone 10 ou fourni dans un format de microcarte amovible qui peut être insérée dans une fente ou un logement du téléphone 10. Dans une architecture de jeu de puces NFC standard pour téléphone portable ("chipset"), les processeurs BBP, P1 et P2 sont considérés comme processeurs hôtes du contrôleur NFCC (Cf. par exemple les demandes de brevets EP 1 855 229 et EP 1 855 389 ou US 2007/0263595 et US 2007/0263596 au nom du déposant). Le routage de données entre les divers éléments est effectué par le contrôleur NFCC selon un protocole HCI (Host Controller Interface ou protocole d'interface hôte).

Malgré ces récents développements, le principal obstacle au développement de la technologie NFC dans les téléphones portables est le marché lui-même, c'est-à-dire la demande des utilisateurs, ainsi que le nombre d'applications NFC actuellement disponibles. En d'autres termes, "l'équation commerciale" qui doit être résolue pour permettre un développement rapide de la technologie NFC est de diminuer le prix des téléphones portables NFC - idéalement un téléphone portable NFC devrait être vendu au même prix qu'un téléphone portable conventionnel - tout en augmentant le nombre d'applications disponibles pour les utilisateurs. Cependant, l'un ne va pas sans l'autre : un nombre plus important d'applications encouragerait plus d'utilisateurs à acquérir des téléphones portables NFC, ce qui engendrerait une baisse du prix en raison de la production de masse. Inversement, un nombre plus important d'utilisateurs de téléphones portables NFC encouragerait les fournisseurs de services à offrir un nombre plus important d'applications NFC. Étant donné que ces deux paramètres de "l'équation commerciale" sont interdépendants, on peut comprendre que la baisse du coût de la technologie NFC intégrée est un facteur essentiel de son développement.

De ce point de vue, l'intégration matérielle des contrôleurs NFC dans des plates-formes de téléphones portables NFC existantes est un obstacle au développement de la technologie NFC et entraîne une augmentation du coût de la plate-forme qui est plus important que le coût du contrôleur NFC lui-même. En effet, une telle intégration nécessite des modifier l'architecture de la carte mère du téléphone et de modifier l'architecture des autres éléments (en particulier pour qu'ils s'adaptent à l'interface HCI).

Il est ainsi souhaité de promouvoir la technologie NFC en proposant une solution simple qui permette à des utilisateurs de téléphones portables de bénéficier de la technologie NFC et de ses applications sans exiger des fabricants de téléphones portables qu'ils revoient l'architecture matérielle de leurs téléphones portables.

Des modes de réalisation de l'invention concernent une enveloppe de protection pour dispositif électronique portable, conformé pour recouvrir au moins 40% de la surface du dispositif portable, et comprenant au moins un premier logement recevant au moins un premier processeur hôte ou adapté pour recevoir au moins un premier processeur hôte, au moins une antenne principale, et une liaison entre le processeur hôte et l'antenne principale.

Selon un mode de réalisation, la liaison entre le processeur et l'antenne principale est un câblage interne.

Selon un mode de réalisation, la liaison entre le processeur et l'antenne principale est une antenne auxiliaire connectée au processeur hôte, qui est inductivement couplée à l'antenne principale.

Selon un mode de réalisation, le premier logement est conformé pour recevoir une microcarte, dans laquelle le processeur hôte est intégré.

Selon un mode de réalisation, l'enveloppe de protection comprend également un contrôleur de communication sans contact ou un second logement recevant ou adapté pour recevoir le contrôleur de communication, et une liaison entre le contrôleur de communication sans contact et l'antenne principale.

Selon un mode de réalisation, le premier logement comprend un premier groupe de contacts pour établir un contact avec le processeur hôte. Le contrôleur de communication sans contact est relié à l'antenne par câblage interne, et le contrôleur de communication sans contact est relié à des contacts du premier groupe de contacts par câblage interne, de telle sorte que le processeur hôte est relié à l'antenne principale via le contrôleur de communication sans contact.

Selon un mode de réalisation, le contrôleur de communication sans contact est relié à l'antenne par câblage interne, et l'antenne principale est configurée pour être inductivement couplée à une antenne auxiliaire du processeur hôte.

Selon un mode de réalisation, l'enveloppe de protection comprend un second logement pour accueillir le contrôleur de communication sans contact. Le premier logement comprend un premier groupe de contacts pour établir un contact avec le processeur hôte. Le second logement comprend un second groupe de contacts pour établir un contact avec le processeur hôte. Des contacts du second groupe de contacts sont connectés à l'antenne principale par câble interne, et des contacts du premier groupe de contacts sont reliés à des contacts du second groupe de contacts par câblage interne, de telle sorte que le processeur hôte est relié à l'antenne principale via le contrôleur de communication sans contact.

Selon un mode de réalisation, l'enveloppe de protection comprend également au moins un connecteur configuré pour être connecté au dispositif électronique portable, et un câblage électrique et des contacts internes pour relier le processeur de communication sans contact au connecteur.

Selon un mode de réalisation, l'enveloppe de protection comprend également au moins un circuit d'interface sans fil relié au contrôleur de communication sans contact et configuré pour établir une liaison sans fil entre le contrôleur de communication sans contact et le dispositif portable.

Selon un mode de réalisation, l'enveloppe de protection comprend également au moins une source d'alimentation comme par exemple une batterie électrique, une cellule solaire, ou les deux.

Selon un mode de réalisation, l'enveloppe de protection comprend également un câblage électrique interne présentant des conducteurs formés sur une face d'un matériau isolant formant le corps de l'enveloppe, ou intégrés dans le matériau isolant.

Selon un mode de réalisation, le corps de l'enveloppe comprend au moins un matériau souple et flexible.

Des modes de réalisations de la présente invention concernent également un procédé pour mettre en oeuvre une technologie de communication sans contact avec un dispositif électronique portable. Le procédé comprend des étapes consistant à fournir une enveloppe de protection pour le dispositif portable, conformée pour recouvrir au moins 40% d'une surface du dispositif portable, et prévoir, dans l'enveloppe de protection : au moins un premier logement recevant au moins un premier processeur hôte ou adapté pour recevoir au moins un premier processeur hôte, et au moins une antenne principale, reliée au processeur hôte ou inductivement couplée à une antenne auxiliaire du processeur hôte.

Selon un mode de réalisation, le procédé comprend également une étape consistant à fournir une puce NFC sans contact intégrée dans une microcarte à insérer dans le premier logement.

Selon un mode de réalisation, le procédé comprend également l'étape consistant à : fournir, dans l'enveloppe de protection, un contrôleur de communication sans contact intégré dans l'enveloppe de protection ou un second logement recevant ou prévu pour recevoir un contrôleur de communication sans contact, et un câblage électrique pour relier le contrôleur de communication sans contact à l'antenne principale. Le procédé comprend également l'étape consistant à fournir une puce sécurisée auxiliaire intégrée dans une microcarte, afin de permettre à des utilisateurs d'effectuer des transactions impliquant le débit d'un compte utilisateur.

Selon un mode de réalisation, le procédé comprend également l'étape consistant à prévoir, dans l'enveloppe de protection, au moins un connecteur à connecter au dispositif portable.

Selon un mode de réalisation, le procédé comprend également l'étape consistant à prévoir, dans l'enveloppe de protection, un circuit d'interface sans fil configuré pour établir une liaison sans fil avec le dispositif portable.

Ces objets et caractéristiques de l'invention seront mieux compris en relation avec la description ci-après de modes de réalisation de l'invention, faite à titre non limitatif en relation avec les figures suivantes parmi lesquelles :
- La figure 1 représente schématiquement l'architecture conventionnelle d'un téléphone portable NFC ;
- Les figures 2A, 2B sont des vues de face d'un premier mode de réalisation d'une enveloppe de protection selon l'invention ;
- La figure 3 est une vue de dos de l'enveloppe de protection des figures 2A et 2B;
- Les figures 4A et 4B représentent les vues de face et de dos d'un exemple de composant électronique à insérer dans l'enveloppe de protection ;
- La figure 5 représente l'architecture électrique de l'enveloppe de protection de la figure 3 lorsqu'elle est équipée des composants électroniques des figures 4A, 4B et connectée au téléphone portable ;
- La figure 6 est une vue de dos d'un second mode de réalisation d'une enveloppe de protection selon l'invention ;
- La figure 7 est une vue de dos d'un troisième mode de réalisation d'une enveloppe de protection selon l'invention ;
- La figure 8 représente l'architecture électrique de l'enveloppe de protection de la figure 7 ;
- Les figures 9A et 9B sont des vues de face et de dos de modes de réalisation d'une enveloppe de protection selon l'invention ;
- La figure 10 représente l'architecture électrique d'un quatrième mode de réalisation d'une enveloppe de protection selon l'invention ;
- La figure 11 représente des applications de l'enveloppe de protection ; et
- Les figures 12 et 13 sont des vues de dos d'un cinquième et d'un sixième modes de réalisation d'une enveloppe de protection selon l'invention.

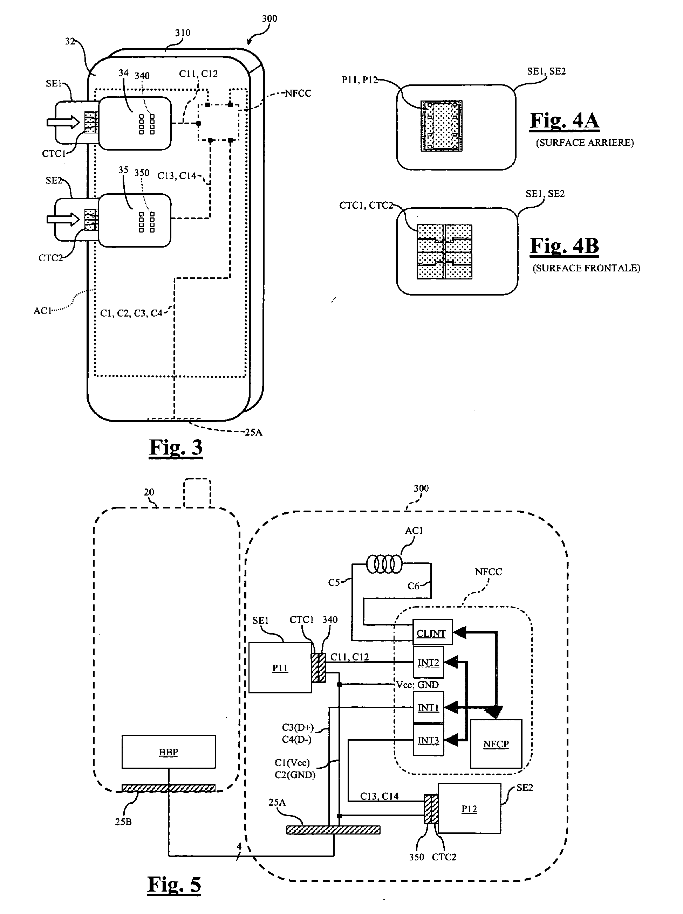

Les figures 2A, 2B et 3 représentent un mode de réalisation 300 d'une enveloppe de protection selon l'invention, conçue pour accueillir un téléphone portable 20. L'enveloppe de protection comprend une face avant 31 (figures 2A, 2B), une face arrière 32 (figure 3) et recouvre au moins 40% de la surface du téléphone. Une ouverture 310 est prévue entre la face avant et la face arrière de telle sorte que le téléphone 20 peut être inséré dans l'enveloppe 300, tel que représenté sur les figures 2A, 2B. La face avant 31 comprend en outre une ouverture 311 permettant d'accéder à un écran 21 du téléphone 20 et une ouverture 312 permettant d'accéder à un clavier 22 du téléphone 20. Les ouvertures 311, 312 peuvent être recouvertes d'un matériau fin et transparent si l'on souhaite protéger le téléphone de la pluie. D'autres ouvertures peuvent être prévues, par exemple pour permettre d'accéder à des boutons et/ou des connecteurs du téléphone. Dans certains modes de réalisation, une seule ouverture peut être prévue sur la face avant afin d'accueillir un téléphone dépourvu de clavier, équipé d'un écran tactile.

L'enveloppe de protection 300 comprend également un connecteur mâle ou femelle 25A prévu pour se connecter à un connecteur mâle ou femelle 25B correspondant du téléphone portable 20 lorsque celui-ci est inséré dans l'enveloppe de protection 300. Par exemple, le connecteur 25A est un connecteur USB mâle et le connecteur 25B est un connecteur USB femelle.

Tel que représenté sur la figure 3, l'enveloppe de protection 300 comprend également, situé sur ou dans sa face arrière 32, un contrôleur NFCC et une bobine d'antenne AC1 présentant un ou plusieurs enroulements. Le contrôleur NFCC est en forme de puce de semi-conducteur et est connecté à la bobine d'antenne AC1. Ces deux éléments sont représentés par transparence sur la figure 3, à travers le matériau de l'enveloppe 300.

L'architecture du contrôleur NFCC est par exemple similaire à l'architecture d'un contrôleur NFC commercialisé par la société Inside Contactless sous la désignation Microread®, et intègre une fonction de lecteur NFC (mode actif) et une fonction d'émulation de carte NFC (mode passif). Le contrôleur NFCC peut fonctionner selon différents protocoles sans contact, par exemple ISO 14443 A/B, 15693, 18092, etc. L'enveloppe de protection 300 comprend également un ou plusieurs logements pour recevoir d'autres composants, ici deux logements 34, 35. Chaque logement 34, 35 comprend une fente d'insertion adaptée pour recevoir une microcarte, respectivement SE1, SE2, qui peut présenter un format conventionnel comme par exemple Micro-SIM, Plug-in SIM ou ID-000, et qui peut être détachée par l'utilisateur d'une carte ISO ID-1 la première fois qu'il l'utilise.

Chaque microcarte SE1, SE2 est du type "élément sécurisé" ("secure element") et est prévue pour sécuriser certains types de transactions. Par exemple, la microcarte SE1 est fournie par un premier fournisseur d'application et la microcarte SE2 est fournie par un second fournisseur d'application.

En référence à la figure 4A, illustrant la face arrière des microcartes, chaque microcarte SE1, SE2 comprend un processeur sécurisé, respectivement P11, P12, sous forme de puce de semi-conducteur intégrée dans la microcarte, qui est représentée par transparence sur la figure 4A, à travers le matériau de la microcarte. Tel que représenté sur la figure 4B, la face avant de chaque microcarte SE1, SE2 comporte un groupe de contacts CTC1, CTC2, respectivement, connectés aux entrées/sorties correspondantes du processeur P11, P12.

Toujours en référence à la figure 3, chaque logement 34, 35 est également équipé d'un groupe de contacts 340, 350, représenté par transparence. Chaque contact du groupe de contacts 340, 350 est agencé afin de se connecter à un contact du groupe de contacts CTC1, CTC2 des microcartes SE1, SE2 lors de leur insertion dans les logements 34, 35. L'enveloppe de protection 300 comprend également divers conducteurs électriques C1 à C6, C11, C12, C13, C14 qui permettent de réaliser une configuration d'interconnexion représentée sur la figure 5.

La figure 5 représente le schéma électrique de l'enveloppe de protection lorsqu'elle est connectée au téléphone 20 via les connecteurs 25A, 25B et lorsque les microcartes SE1, SE2 sont insérées dans les logements respectifs 34, 35. On suppose dans cet exemple de réalisation que les connecteurs 25A, 25B sont de type USB et comprennent des bornes Vcc (alimentation), GND (masse), D+ et D- (signaux de données). Les conducteurs C1 à C4 sont connectés aux bornes du connecteur 25A. Le conducteur C1 transporte la tension d'alimentation Vcc, le conducteur C2 transporte le potentiel de masse GND, le conducteur C3 transporte le signal de données D+, et le conducteur C4 transporte le signal de données D-. Le contrôleur NFCC est connecté aux conducteurs C1-C6, C11-C14. Les processeurs P11, P12 sont connectés aux conducteurs C1 (Vcc) et C2 (GND) par des contacts des groupes de contacts CTC1, CTC2, respectivement, et des contacts des groupes de contacts 340, 350, respectivement. Le contrôleur NFCC et les processeurs P11, P12 sont de cette façon alimentés électriquement par le téléphone portable via les connecteurs 25A, 25B. Les conducteurs C11, C12 sont également reliés à des entrées/sorties du processeur P11 par des contacts du groupe de contacts 340 et des contacts du groupe de contacts CTC1. Les conducteurs C13, C14 sont également reliés à des entrées/sorties du processeur P12 par des contacts du groupe de contacts 350 et des contacts du groupe de contacts CTC2. Ainsi, le contrôleur NFCC est relié au processeur P11 par les conducteurs C11, C12 et au processeur P12 par les conducteurs C13, C14 et peut échanger des données avec ce dernier.

Selon un mode de réalisation, les processeurs P11 et P12 peuvent être alimentés par des bornes d'alimentation du contrôleur NFCC, au lieu d'être connectés aux lignes Vcc/GND du bus USB.

Un exemple d'architecture du contrôleur NFCC est également représenté sur la figure 5. Le contrôleur NFCC comprend un processeur NFCP, trois circuits d'interface INT1, INT2, INT3, et un circuit d'interface sans contact CLINT. Les circuits d'interface INT1-INT3, CLINT sont reliés au processeur NFCP par des données et des bus d'adresse internes. Le circuit d'interface CLINT est connecté à la bobine d'antenne AC1 par les conducteurs C5, C6. Le circuit d'interface CLINT comprend des circuits de modulation et de démodulation, ainsi que des composants de circuit d'antenne, par exemple des condensateurs d'accord. Dans certains modes de réalisation, l'un des conducteurs C5, C6 peut également former la bobine d'antenne AC1 et présenter à cet effet des extensions formant un ou plusieurs enroulements inductifs.

L'interface INT1 est un circuit d'interface USB et est reliée au processeur BBP du téléphone portable par les conducteurs C3(D+), C4(D-) et les connecteurs 25A, 25B. De cette façon, le contrôleur NFCC peut échanger des données avec le processeur de bande de base BBP du téléphone. Les circuits d'interface INT2, INT3 sont par exemple des circuits de communication série comme par exemple des circuits récepteurs-émetteurs universels asynchrones (UART) ou tout autre type d'interface de communication habituellement mis en oeuvre dans les contrôleurs NFC, comme par exemple une interface SWP (Single Wire Protocol), S2C (SigIn SigOut), ISO 7816, etc. L'interface INT2 est connectée aux conducteurs C11, C12, qui sont reliés au processeur P11. L'interface INT3 est connectée aux conducteurs C11, C12 qui sont reliés au processeur P12. De cette façon, le contrôleur NFCC peut échanger des données avec les processeurs P11, P12.

Le groupe d'éléments formé par le contrôleur NFCC, les processeurs P11, P12, et le processeur de bande de base BBP, interconnectés de la façon mentionnée ci-dessus, forme l'équivalent d'un jeu de puces NFC du type décrit dans les demandes EP 1 855 229 et EP 1 855 389, ou US 2007/263595 et US 2007/263596, dans lesquelles P11, P12 sont des processeurs hôtes du contrôleur NFCC. Ainsi, lorsqu'une liaison de communication sans contact a été établie entre le contrôleur NFCC et un dispositif sécurisé externe, un des processeurs hôtes P11, P12 peut gérer une transaction sécurisée avec le dispositif sécurisé externe par le contrôleur NFCC. Cependant, un tel "jeu de puces" est ici mis en oeuvre sans qu'il soit nécessaire d'intégrer le contrôleur NFCC et les processeurs hôtes P11, P12 sur la carte mère du téléphone portable.

Le matériau formant le corps de l'enveloppe de protection 300 peut être un matériau électriquement isolant qui est monocouche ou multicouche. Il est de préférence souple et flexible, mais peut également être rigide dans des applications pour lesquelles une protection plus importante est souhaitée. Les conducteurs C1-C6, C11-C14 sont par exemple des pistes conductrices déposées sur le matériau formant l'enveloppe de protection ou prises en sandwich entre deux couches de ce matériau ou de différents matériaux. De la même façon, la puce contrôleur NFCC peut être montée sur le matériau formant l'enveloppe de protection ou prise en sandwich entre deux couches de ce matériau ou de différents matériaux. Dans un mode de réalisation, le matériau formant l'enveloppe de protection est très fin et l'enveloppe de protection forme une sorte de "peau intelligente" qui recouvre le téléphone.

Un écran magnétique, par exemple une couche magnéto-réflective comprenant un matériau magnéto-conducteur, peut également être prévu sur, ou dans l'enveloppe de protection afin de protéger la circuiterie du téléphone du champ magnétique émis pas la bobine d'antenne AC1.

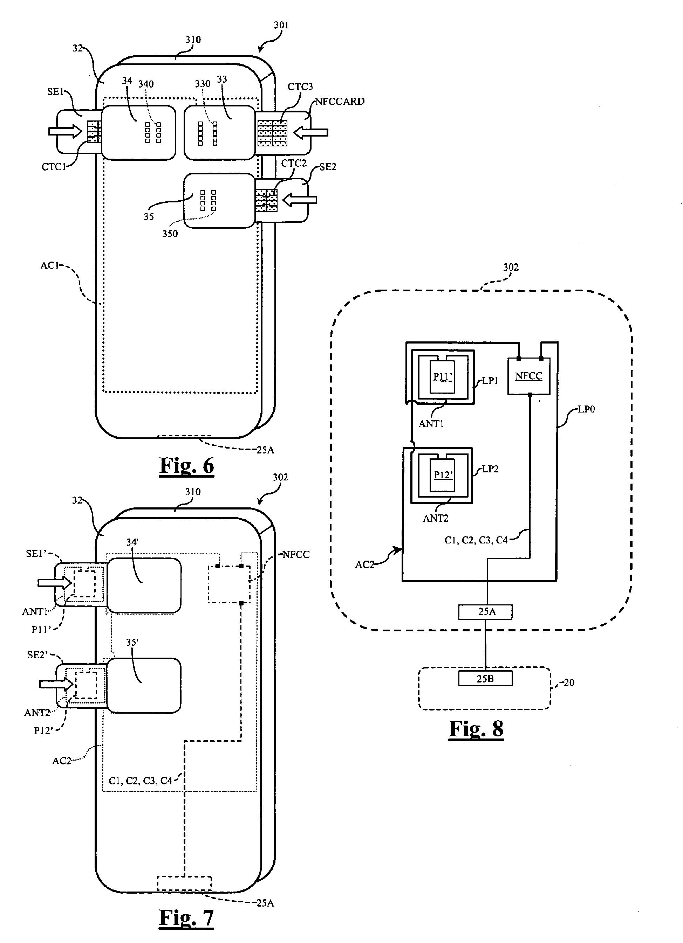

La figure 6 illustre un mode de réalisation 301 de l'enveloppe de protection qui diffère de celui de la figure 3 en ce que le contrôleur NFCC n'est plus intégré dans l'enveloppe et en ce qu'un logement 33 est prévu pour recevoir le contrôleur NFCC. Le logement 33 comprend une fente d'insertion qui comprend un groupe de contacts 330, représentés par transparence sur la figure 6, à travers le matériau de l'enveloppe de protection. Le processeur NFCC est intégré dans une microcarte NFCCARD, dont la face avant comprend un groupe de contacts CTC3 qui sont connectés à des entrées/sorties du contrôleur NFCC. Le contrôleur NFCC est relié aux conducteurs C1-C6 et C11-C14 par des contacts du groupe de contacts CTC3 et des contacts du groupe de contacts 330.

La figure 7 illustre un mode réalisation 302 de l'enveloppe de protection qui diffère de celui de la figure 3 en ce que l'enveloppe de protection comprend des logements 34', 35' sans groupes de contacts prévus pour accueillir une microcarte sans contact SE1', SE2', respectivement. Les conducteurs C11 à C14 ne sont pas non plus présents dans l'enveloppe. Chaque microcarte SE1', SE2' comprend une bobine d'antenne auxiliaire intégrée ANT1, ANT2 à la place des groupes de contacts CTC1, CTC2 et un processeur P11', P12' connecté à la bobine d'antenne auxiliaire ANT1, ANT2, respectivement. Les bobines d'antenne auxiliaires ANT1, ANT2 sont représentées schématiquement et peuvent comprendre un ou plusieurs enroulements. De plus, la bobine d'antenne AC1 est remplacée par une bobine d'antenne AC2 conçue pour être inductivement couplée aux bobines d'antenne auxiliaires ANT1, ANT2. Chaque processeur P11', P12' est un circuit intégré sans contact, par exemple tel que celui commercialisé par Inside Contactless sous la désignation Micropass®, qui est généralement intégré dans des cartes à puces sans contact.

La figure 8 représente le schéma électrique de l'enveloppe de protection 302. L'antenne AC2 comprend une boucle principale LP0 et deux boucles auxiliaires LP1, LP2 en série. Les boucles LP0, LP1, LP2 sont représentées schématiquement et peuvent comprendre un ou plusieurs enroulements. La boucle auxiliaire LP1 entoure la zone où se situe la microcarte SE1' (c'est-à-dire l'emplacement défini par le logement 34') de façon à être inductivement couplée à la bobine d'antenne auxiliaire ANT1 de la microcarte SE1'. La boucle auxiliaire LP2 entoure la zone où se situe la microcarte SE2' (définie par le logement 35') de façon à être inductivement couplée à la bobine d'antenne auxiliaire ANT2 de la microcarte SE2'. Grâce à cet agencement, le contrôleur NFCC peut échanger des données avec un composant NFC externe par couplage inductif de l'antenne AC2 avec la bobine d'antenne du composant externe, échanger des données avec le processeur P11' de la microcarte SE1' par couplage inductif d'AC2 (boucle LP1) avec la bobine d'antenne ANT1, échanger des données avec le processeur P12' de la microcarte SE2' par couplage inductif d'AC2 (boucle LP2) avec la bobine d'antenne ANT2, et échanger des données avec le téléphone portable 20 par le connecteur 25A et les conducteurs C1 à C4.

Les processeurs P11', P12' peuvent également être configurés pour effectuer des transactions NFC. Dans ce cas, l'enveloppe de protection 302 peut également être utilisée en mode passif dans lequel un lecteur NFC externe ou un contrôleur NFC externe établit une communication avec un des processeurs P11', P 12' pour mettre en oeuvre une transaction. La bobine d'antenne AC2, qui est inductivement couplée à des bobines d'antenne auxiliaires ANT1, ANT2, est par conséquent utilisée par le processeur P11' ou P12' comme antenne amplificatrice ("booster antenna") pendant la transaction, pour accroître la distance de communication avec le lecteur NFC externe ou le contrôleur NFC externe. Une fois la transaction effectuée, le contrôleur NFCC peut demander aux processeurs P11' ou P12' de lui transmettre les données de transaction ou un résumé de transaction.

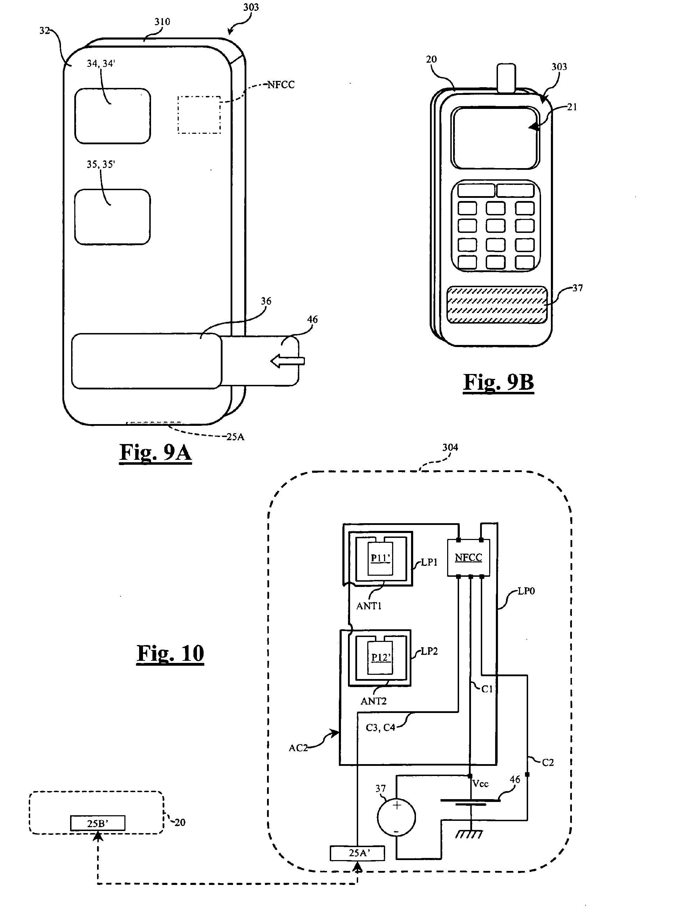

De plus, tel qu'illustré sur la figure 9A, un mode de réalisation 303 de l'enveloppe de protection peut comprendre un logement 36 pour accueillir une batterie électrique 46, et des contacts correspondants (non représentés) afin de fournir aux composants dans l'enveloppe de protection une alimentation Vcc fournie par la batterie. Tel qu'illustré sur la figure 9B, l'enveloppe de protection 303 peut également comprendre une source d'alimentation 37, comme par exemple des cellules solaires.

Dans une autre variante de l'enveloppe de protection, le connecteur 25A est remplacé par une liaison de données sans fil avec le téléphone portable. A titre d'exemple, la figure 10 est un schéma électrique d'un mode de réalisation 304 de l'enveloppe de protection qui diffère de celui de la figure 8 en ce que l'enveloppe de protection est alimentée par la batterie 46 et les cellules solaires 37. De plus, le connecteur 25A est remplacé par un circuit d'interface Bluetooth® sans fil 25A', qui est configuré pour établir une communication avec une interface Bluetooth® sans fil 25B' du téléphone portable 20 sur demande du contrôleur NFCC.

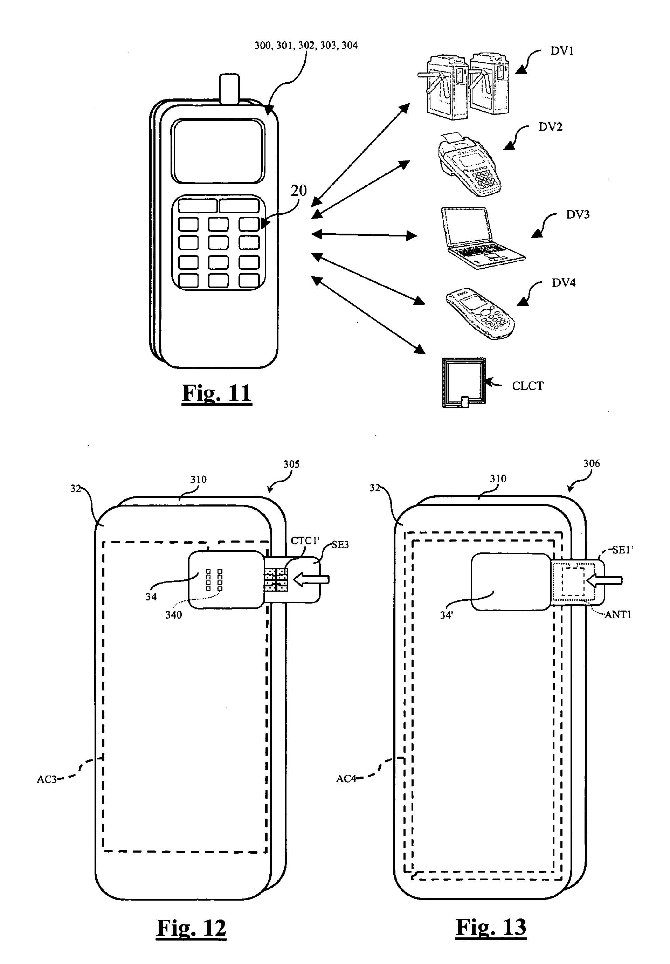

La figure 11 représente des exemples d'application du téléphone portable 20 équipé de l'enveloppe de protection 300, 301, 302, 303, 304 et d'au moins une microcarte sécurisée SE1, SE1', SE2 ou SE2' fournie par un fournisseur de service. La microcarte sécurisée permet de débiter un compte utilisateur pour accéder à des services payants. Le téléphone équipé de l'enveloppe de protection 300-304 offre les mêmes fonctionnalités NFC qu'un téléphone NFC. Il peut échanger des données par couplage inductif avec des dispositifs NFC externes et permet par exemple, (i) le paiement d'un accès au transport en effectuant une transaction NFC à l'aide d'un terminal de paiement DV1, (ii) le paiement d'un service ou d'une facture (restaurant, station essence, etc. ) en effectuant une transaction à l'aide d'un terminal de paiement DV2, (iii) l'échange de données avec un autre dispositif NFC tel qu'un micro-ordinateur DV3 équipé d'une interface NFC ou un téléphone NFC DV4, et (iv) la lecture ou l'écriture de données dans des étiquettes électroniques CLCT, etc.

Divers autres modes de réalisation d'une enveloppe de protection selon des modes de réalisation de l'invention peuvent être envisagés par l'homme de l'art. Divers autres processeurs peuvent être prévus pour offrir des fonctionnalités ou des services sans fil supplémentaires. De même, il est possible de prévoir des logements supplémentaires pour recevoir des cartes mémoires comprenant un logiciel d'application NFC ou des cartes mémoire pour sauvegarder des données de transaction.

Des modes de réalisation passifs de l'enveloppe de protection peuvent également être prévus pour être utilisés comme une "enveloppe intelligente" passive et peuvent comprendre un ou plusieurs circuits intégrés sans contact sans le contrôleur NFCC. A titre d'exemple, la figure 12 illustre un mode de réalisation 305 dans lequel l'enveloppe de protection ne comprend que le logement 34 décrit précédemment, le groupe de contacts 340, et une bobine d'antenne AC3 comprenant un ou plusieurs enroulements. Des bornes de la bobine d'antenne AC3 sont connectées à des contacts du groupe de contacts 340. Un élément sécurisé SE3 sous forme de microcarte est inséré dans le logement 34. L'élément sécurisé SE3 comprend un processeur sans contact intégré sous forme de puce de semi-conducteur (non représenté) et d'un groupe de contacts CTC1' reliés à des entrées/sorties du processeur sans contact. Lorsque l'élément sécurisé SE3 est inséré dans le logement 34, le processeur est connecté à la bobine d'antenne AC3 et un lecteur NFC ou un contrôleur NFC externe peut effectuer des transactions avec le processeur par couplage inductif.

Un autre exemple d"'enveloppe intelligente" passive 306 est illustré sur la figure 13. L'enveloppe de protection ne comprend qu'une bobine d'antenne AC4 et le logement 34' précédemment décrit. L'élément sécurisé SE1' est inséré, avec sa bobine d'antenne ANT1, dans le logement 34'. La bobine d'antenne entoure la zone de la bobine d'antenne ANT1 (c'est-à-dire l'emplacement défini par le logement 34') et se comporte comme une antenne amplificatrice.

Par ailleurs, au lieu d'être équipé d'une puce de communication contrôleur NFC utilisant une bobine d'antenne à champs B et des techniques de couplage inductif pour communiquer avec des dispositifs NFC externes, des modes de réalisation de l'enveloppe de protection selon l'invention peuvent comprendre des processeurs réseau UHF. Dans ce cas, une antenne à champ E, comme par exemple une antenne bipolaire ou une antenne en pétale, est prévue à la place de la bobine d'antenne à champ B.

Enfin, une enveloppe de protection selon des modes de réalisation de l'invention peut également être configurée pour être utilisée avec de nombreux autres types de dispositifs électroniques portables comme par exemple des assistants numériques personnels (PDA), des lecteurs MP3, etc.

L'homme de l'art appréciera les modifications que l'on peut apporter aux modes de réalisation décrits ci-dessus sans s'éloigner de leur concept inventif. On comprend par conséquent que cette invention ne se limite pas aux modes de réalisations particuliers décrits ici, mais vise à couvrir des modifications dans l'esprit et la portée de la présente invention telle que définie dans les revendications jointes.

## Revendications

1. Enveloppe de protection (300, 301, 302, 303, 304, 305, 306) pour dispositif électronique portable, conformée pour recouvrir au moins 40% d'une surface du dispositif portable et comprenant :
- au moins un premier logement (34, 34', 35, 35') recevant au moins un premier processeur hôte (P11, P11', P12, P12') ou configuré pour recevoir au moins un premier processeur hôte,
- au moins une antenne principale (AC1-AC4), et
- une liaison entre le processeur hôte et l'antenne principale.

2. Enveloppe de protection selon la revendication 1, dans laquelle la liaison entre le processeur hôte et l'antenne principale comprend un câblage interne (C11-C14).

3. Enveloppe de protection selon la revendication 1, dans laquelle la liaison entre le processeur hôte et l'antenne principale comprend une antenne auxiliaire (ANT1, ANT2) connectée au processeur hôte, qui est inductivement couplée à l'antenne principale (AC1-AC4).

4. Enveloppe de protection selon la revendication 1, dans laquelle le premier logement est conformé pour recevoir une microcarte (SE1, SE1', SE2, SE2', SE3) dans laquelle le premier processeur hôte est intégré.

5. Enveloppe de protection selon la revendication 1, comprenant :
- un contrôleur de communication sans contact (NFCC) ou un second logement (33) recevant ou adapté pour recevoir le contrôleur de communication, et
- une liaison entre le contrôleur de communication sans contact et l'antenne principale.

6. Enveloppe de protection selon la revendication 5, dans laquelle :
- le premier logement (34, 35) comprend un premier groupe de contacts (340, 350) pour établir un contact avec le processeur hôte,
- le contrôleur de communication sans contact (NFCC) est relié à l'antenne par un câblage interne (C5, C6), et
- le contrôleur de communication sans contact est relié aux contacts du premier groupe de contacts par un câblage interne (C11-C14), de telle sorte que le processeur hôte est relié à l'antenne principale via le contrôleur de communication sans contact.

7. Enveloppe de protection selon la revendication 5, dans laquelle :
- le contrôleur de communication sans contact est relié à l'antenne par un câblage interne, et l'antenne principale (AC2) est configurée pour être inductivement couplée à une antenne auxiliaire (ANT1, ANT2) du processeur hôte.

8. Enveloppe de protection selon la revendication 5, comprenant un second logement (35) pour accueillir le contrôleur de communication sans contact, et dans laquelle :
- le premier logement (34, 35) comprend un premier groupe de contacts (340, 350) pour établir un contact avec le processeur hôte,
- le second logement (33) comprend un second groupe de contacts (330) pour établir un contact avec le contrôleur de communication sans contact, des contacts du second groupe de contacts étant connectés à l'antenne principale (AC1) par câblage interne, et
- des contacts du premier groupe de contacts sont reliés à des contacts du second groupe de contacts par câblage interne, de telle sorte que le processeur hôte est relié à l'antenne principale via le contrôleur de communication sans contact.

9. Enveloppe de protection selon la revendication 5, comprenant :
- au moins un connecteur (25A) configuré pour être connecté au dispositif électronique portable, et
- un câblage électrique et des contacts internes pour relier le processeur de communication sans contact au connecteur.

10. Enveloppe de protection selon la revendication 5, comprenant au moins un circuit d'interface sans fil (25A') relié au contrôleur de communication sans contact, et configuré pour établir une connexion sans fil entre le contrôleur de communication sans contact et le dispositif portable.

11. Enveloppe de protection selon la revendication 1, comprenant au moins une source d'alimentation comprenant une batterie électrique (46) et/ou une cellule solaire (37).

12. Enveloppe de protection selon la revendication 1, comprenant également un câblage électrique interne comprenant des conducteurs formés sur une face d'un matériau isolant formant le corps de l'enveloppe, ou intégrés dans le matériau isolant.

13. Enveloppe de protection selon la revendication 1, dans laquelle le corps de l'enveloppe comprend au moins un matériau souple et flexible.

14. Procédé pour mettre en oeuvre une technologie de communication sans contact avec un dispositif électronique portable, comprenant les étapes consistant à :
- fournir une enveloppe de protection (300, 301, 302, 303, 304, 305, 306) pour le dispositif portable, l'enveloppe de protection étant conformée pour recouvrir au moins 40% d'une surface du dispositif portable, et
- prévoir, dans l'enveloppe de protection :
- au moins un premier logement (34, 34', 35, 35') recevant au moins un premier processeur hôte ou adapté pour recevoir au moins un premier processeur hôte, et
- au moins une antenne principale (AC1-AC4) reliée au processeur hôte ou inductivement couplée à une antenne auxiliaire (ANT1, ANT2) du processeur hôte.

15. Procédé selon la revendication 14, comprenant également une étape consistant à fournir une puce NFC sans contact intégrée dans une microcarte (SE1, SE1', SE2, SE2', SE3) à insérer dans le premier logement.

16. Procédé selon la revendication 14, comprenant également les étapes consistant à
- prévoir, dans l'enveloppe de protection :
- un contrôleur de communication sans contact (NFCC) intégré dans l'enveloppe de protection ou un second logement recevant ou adapté pour recevoir un contrôleur de communication sans contact, et
- un câblage électrique pour relier le contrôleur de communication sans contact à l'antenne principale, et
- fournir une puce sécurisée auxiliaire intégrée dans une microcarte (SE1, SE1', SE2, SE2', SE3) afin de permettre à des utilisateurs d'effectuer des transactions impliquant le débit d'un compte utilisateur.

17. Procédé selon la revendication 14, comprenant également l'étape consistant à prévoir, dans l'enveloppe de protection, au moins un connecteur (25A) à connecter au dispositif portable.

18. Procédé selon la revendication 14, comprenant également l'étape consistant à prévoir, dans l'enveloppe de protection, un circuit d'interface sans fil (25A') configuré pour établir une liaison sans fil avec le dispositif portable.
